# EUROPEAN PATENT APPLICATION

(11) **EP 2 722 957 A1**
(43) Date of publication of application: **23.04.2014**
(21) Application number: 12800507.1
(22) Date of filing: 14.06.2012
(51) Int. Cl.: H02J 3/32, H01M 10/44, H01M 10/48, H02J 3/46, H02J 7/00, H02J 7/34

(54) **CHARGING SYSTEM, POWER MANAGEMENT SERVER, VEHICLE MANAGEMENT SERVER, AND POWER MANAGEMENT PROGRAM**

(30) Priority: 17.06.2011 JP 2011135667
(71) Applicant: NEC Corporation, Tokyo 108-8001 (JP)
(72) Inventor: NYU, Takayuki, Tokyo 108-8001 (JP)
(74) Representative: Betten & Resch
(86) International application number: PCT/JP2012/065256
(87) International publication number: WO 2012/173194

(57) **Abstract**

A power management server calculates a remaining time before a battery is fully charged (step 603), and determines whether or not the calculated remaining time is equal to or shorter than a threshold (step 604). When the remaining time is equal to or shorter than the threshold (step 604: YES), the power management server generates charge promotion information for prompting charging of an electric vehicle from the battery (step 605).

## Description

### BACKGROUND

The present invention relates to a charging system, a power management server, a vehicle management server, and a power management program for providing charge and discharge service to electric vehicles, and in particular, to a technique for adjusting supply and demand of commercial power.

In general, commercial power generated in a power plant is distributed to facilities through a distribution network and consumed by electric loads in the facilities. Normally, commercial power supplied is greater than power demand. However, if, in the daytime in summer or the like, the power demand increases rapidly and is about to exceed supply capacity, then for example, equipment used in the facilities is manually powered off to reduce the electric loads, thus maintaining the balance between the supply and demand of power. As a system for adjusting the power supply and demand, for example, a power supply and demand system described in Patent Document 1 is known. This power supply and demand system is configured to, when a facility generates surplus power, store the surplus power in a battery mounted in an electric vehicle or in a battery in the facility, and when power shortage occurs in the facility, discharge the battery mounted in the electric vehicle or the battery in the facility to compensate for the power shortage.

Patent Document 1: Patent Publication JP-A-2010-98793

### SUMMARY

However, the power supply and demand system described in Patent Document 1 is configured to adjust the supply and demand of commercial power only when the battery mounted in the electric vehicle is electrically connected to a distribution system in the facility. Patent Document 1 fails to discuss how to adjust the supply and demand when the battery mounted in the electric vehicle is not electrically connected to the distribution system in the facility. Even though the adjustment of power supply and demand utilizing the battery mounted in the electric vehicle fails to be carried out unless the battery mounted in the electric vehicle is electrically connected to the distribution system in the facility, no method of prompting the electric vehicle to electrically connect to the distribution system in the facility is disadvantageously provided.

In view of the above-described respects, it is an object of the present invention to prompt the electric vehicle to connected to a charging system to adjust the supply and demand of commercial power.

To achieve the above-described object, a charging system according to the present invention includes a battery, a calculation section configured to calculate a remaining time before a charging rate of the battery exceeds a charging rate indicative of an upper limit threshold, a determination section configured to determine whether or not the calculated remaining time is equal to or shorter than a threshold, and a charge promotion information generation section configured to generate charge promotion information for prompting charging of an electric vehicle from the battery when the remaining time is equal to or shorter than the threshold.

A charging system according to another aspect of the present invention includes a battery, a calculation section configured to calculate a remaining time before a charging rate of the battery becomes lower than a charging rate indicative of a lower limit threshold, a determination section configured to determine whether or not the calculated remaining time is equal to or shorter than a threshold, a discharge promotion information generation section configured to generate discharge promotion information for prompting discharging of power from an electric vehicle to the battery when the remaining time is equal to or shorter than the threshold, and a charger configured to discharge power stored in the electric vehicle to the battery.

The present invention can adjust the supply and demand of commercial power by providing an incentive for prompting the electric vehicle to connect to the charging system.

### DESCRIPTION OF DRAWINGS

Fig. 1 is a block diagram showing a configuration of a charging system according to Embodiment 1.
Fig. 2 is a graph showing a variation in power consumption and a variation in power that can be supplied, in a certain area during rainy weather according to Embodiment 1.
Fig. 3 is a graph showing a variation in power consumption and a variation in power that can be supplied, in the certain area during fine weather according to Embodiment 1.
Fig. 4 is a table showing target power amounts for respective time blocks during rainy weather according to Embodiment 1.
Fig. 5 is a table showing target power amounts for the respective time blocks during fine weather according to Embodiment 1.
Fig. 6 is a flowchart describing processing carried out by a power management server according to Embodiment 1.
Fig. 7 is a graph showing a temporal variation in the amount of power stored in a battery during rainy weather according to Embodiment 1.
Fig. 8 is a graph showing a temporal variation in the amount of power stored in the battery during fine weather according to Embodiment 1.
Fig. 9 is a block diagram showing a configuration of a charging system according to Embodiment 2.
Fig. 10 is a table showing target power amounts for the respective time blocks during rainy weather according to Embodiment 2.
Fig. 11 is a table showing target power amounts for the respective time blocks during fine weather according to Embodiment 2.
Fig. 12 is a flowchart describing processing carried out by a power management server according to Embodiment 2.
Fig. 13 is a block diagram showing a configuration of a charging system according to Embodiment 3.
Fig. 14 is a graph showing a variation in power consumption and a variation in power that can be supplied, in a certain area according to Embodiment 3.
Fig. 15 is a table showing target power amounts for the respective time blocks according to Embodiment 3.
Fig. 16 is a flowchart describing processing carried out by a power management server according to Embodiment 3.

### DETAILED DESCRIPTION

Embodiments of the present invention will be described below with reference to the drawings. The same devices are denoted by the same reference numerals, and duplicate descriptions are omitted.

### Embodiment 1

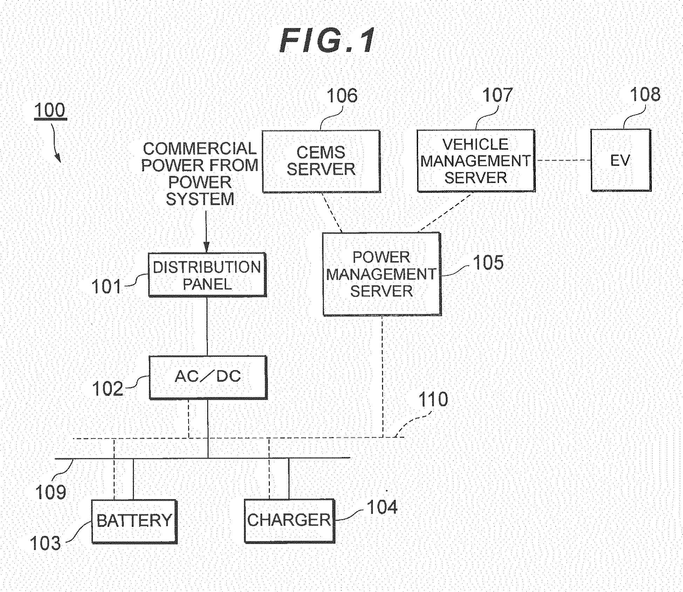

Fig. 1 is a block diagram showing a configuration of a charging system 100 according to Embodiment 1. When a supply capacity for commercial power becomes larger than the power consumption of electric loads (electric loads for business use or for domestic use throughout a certain area including the charging system 100) connected to a distribution network to generate surplus power, to generate surplus power, the charging system 100 generates charge promotion information for prompting an electric vehicle 108 to be charged and distributes or presents the charge promotion information to the electric vehicle 108 to prompt consumption of the surplus power. The electric vehicle 108 is an electric car including a secondary cell electrically connected to the charging system 100 for charging and discharging and an electric motor that generates a driving force using power stored in the secondary cell. The electric vehicle 108 may be a hybrid electric car having both an electric motor and an internal combustion engine.

The charging system 100 includes a distribution panel 101 that receives commercial power from a power system. an AC/DC converter 102 that converts AC power from the distribution panel 101 having received the commercial power into DC power, a battery 103 that stores the DC power resulting from the conversion, a charger 104 that charges the electric vehicle 108 with the power stored in the battery 103, a power management server 105 that carries out power management by controlling the AC/DC converter 102, the battery 103, and the charger 104, a CEMS server 106 that carries out energy management in an area, a vehicle management server 107 that manages information on the electric vehicle 108 (for example, the position or traveling condition (the condition in which the vehicle is traveling or stopped) of the electric vehicle 108) or the SOC (State of Charge) of the secondary cell mounted in the electric vehicle 108), a power line 109 through which the AC/DC converter 102, the battery 103, and the charger 104 receive DC power, and a control network 110 through which the AC/DC converter 102, the battery 103, the charger 104, and the power management server 105 receive information on power control. The power management server 105 and the CEMS server 106 are connected together, the power management server 105 and the vehicle management server 107 are connected together, and the vehicle management server 107 and the electric vehicle 108 are connected together, via a wired network or a wireless network.

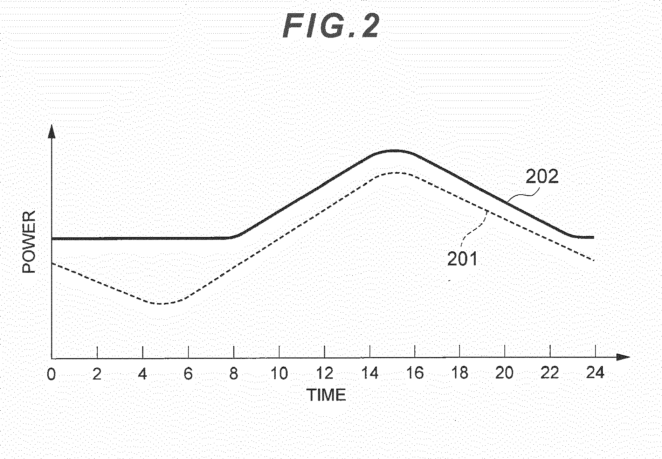

Now, a power management process carried out by the charging system 100 will be described with reference to Fig. 2 to Fig. 8.

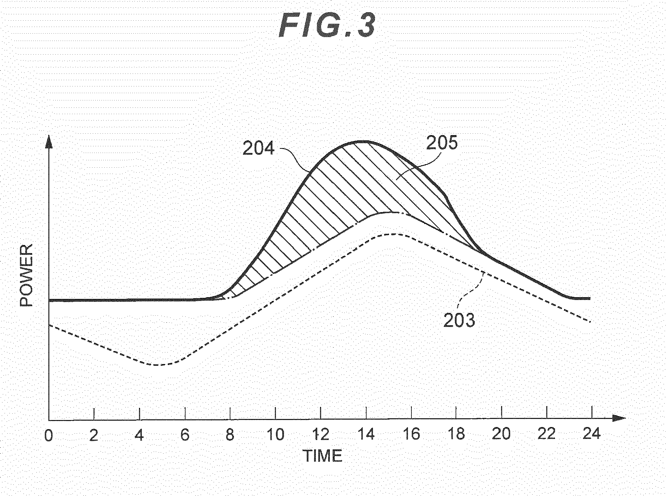

Fig. 2 illustrates a graph 201 showing a variation in power consumption in a certain area during a rainy day and a graph 202 showing a variation in power that can be supplied in the certain area during a rainy day. Fig. 3 is illustrates a graph 203 showing a variation in power consumption in the certain area during a fine day and a graph 204 showing a variation in power that can be supplied in the certain area during a fine day. A photovoltaic power generation facility is installed in the area, and power that can be supplied in the area varies between rainy weather and fine weather. In particular, in a time block from 8:00 to 18:00, no great difference exists between the power that can be supplied and the power consumption during rainy weather as shown in Fig. 2. However, during fine weather, the amount of photovoltaic power generated is larger than the power consumption, leading to surplus power 205, as shown in Fig. 3.

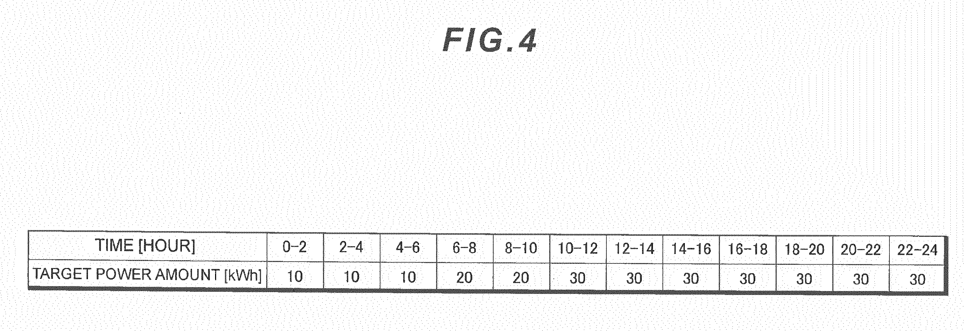

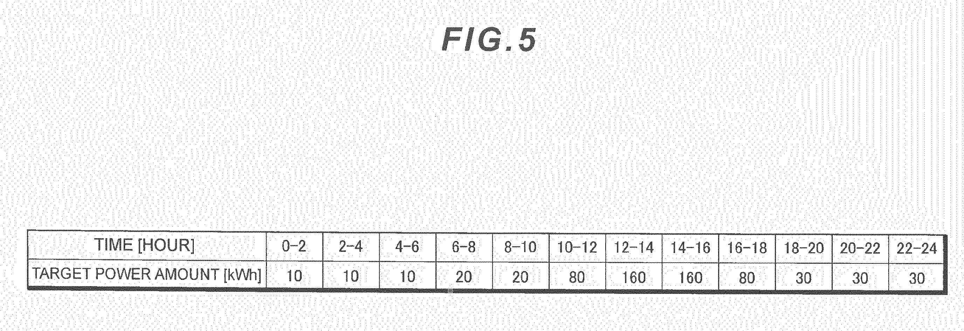

Fig. 4 shows target power amounts that the power management server 105 receives from the CEMS server 106 in the respective time blocks during rainy weather. Fig. 5 shows target power amounts that the power management server 105 receives from the CEMS server 106 in the respective time blocks during fine weather. The "target power amount" shown in Fig. 4 and Fig. 5 is a target value for power consumed by the charging system 100 (power stored in the battery 103 or power stored in the electric vehicle 108). The target power amount varies depending on variations 202 and 204 in the power that can be supplied as shown in Fig. 2 and Fig. 3. For example, as shown in Fig. 5, the target power amount for a time block from 0:00 to 2:00 is 10 kWh, and the target power amount for a time block from 12:00 to 14:00 in the daytime, when high photovoltaic power is expected to be generated thanks to the risen sun, is 160 kWh. On the other hand, as shown in Fig. 4, photovoltaic power generation is not expected to be carried out in a time block from 12:00 to 14:00 during rainy weather, and the target power amount for this time block is limited to 30 kWh.

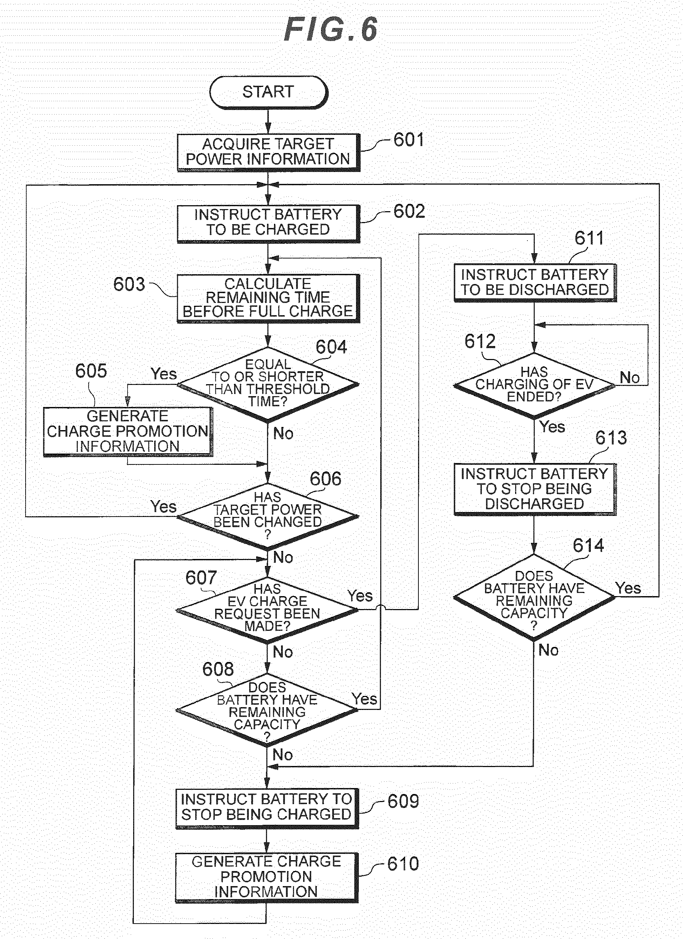

Fig. 6 is a flowchart describing processing carried out by the power management server 105. The power management server 105 receives a target power amount from the CEMS server 106 (step 601). The power management server 105 instructs the battery 103 to be charged with commercial power from the power system in accordance with the specified target power amount (step 602). Upon receiving the charge instruction, the battery 103 is charged with the specified power amount. For example, the battery 103 is charged at 5 kW per hour in a time block from 0:00 to 2:00 and thus charged with 10 kWh in two hours. The power management server 105 calculates a remaining time before the battery is fully charged if the battery 103 continues to be charged in accordance with the target power amount (step 603). The power management server 105 determines whether the remaining time is equal to or shorter than a preset threshold (step 604). If the remaining time is equal to or shorter than the preset threshold (step 604: YES), the battery 103 has only a small remaining capacity, and charging the battery 103 with the target power amount is difficult. Thus, the power management server 105 generates charge promotion information for prompting charging of the electric vehicle 108 (discharging of the battery 103 or reception of power from a commercial power source) (step 605). The charge promotion information includes, for example, incentive information for actively prompting charging (for example, information on a charging price discount or addition of bonus points), information on the range within which the incentive is applicable (for example, information on the upper limit of a charging amount per vehicle and a limitation on the number of vehicles (for example, a first-come-first-served basis) in the case where the charging price discount or the addition of bonus points is applied), and position information indicative of a place where the charging system 100 is installed. On the other hand, if the remaining time is longer than the threshold (step 604: NO), the power management server 105 determines whether or not the target power amount has been changed (step 606). If the target power amount has been changed (step 606: YES), the power management server 105 returns to step 602.

If the target power amount has not been changed (step 606: NO), the power management server 105 determines whether or not the electric vehicle 108 has made a charge request (step 607). If the electric vehicle 108 has not made a charge request (step 607: NO), the power management server 105 determines whether or not the battery 103 has a remaining capacity (step 608). If the battery 103 has no remaining capacity (step 608: NO), the power management server 105 gives a charging stop instruction to the battery 103 (step 609), generates charge promotion information (step 610), and returns to step 607. At this time, since the battery 103 has no remaining capacity, the degree of urgency at which charging of the electric vehicle 108 from the battery 103 needs to be prompted in order to provide a remaining capacity in the battery 103 is higher than when the battery 103 has a remaining capacity. Thus, an incentive for charging provided in the charge promotion information generated in step 610 is preferably higher than an incentive for charging provided in the charge promotion information generated in step 605. For example, the incentive for charging provided in the charge promotion information generated in step 610 preferably involves a larger charging price discount or addition of more bonus points.

On the other hand, if the battery 103 has a remaining capacity (step 608: YES), the power management server 105 returns to step 603. If the electric vehicle 108 has made a charge request (step 607: YES), the power management server 105 gives an instruction to charge the electric vehicle 108 with power from the battery 103 via the charger 104 (step 611). The power management server 105 thus allows the battery 103 to discharge until the charging is complete (step 612). When the charging of the electric vehicle 108 is complete (step 612: YES), the power management server 105 instructs the battery 103 to stop being discharged (step 613). If the battery 103 has no remaining capacity (step 614: NO), the power management server 105 skips to step 609. If the battery 103 has a remaining capacity (step 614: YES), the power management server 105 returns to step 602.

The power management server 105 is a computer system in which a power management program is implemented. Execution of the power management program allows the power management server 105 to function as means (for example, a target power acquisition section, a calculation section, a determination section, and a charge promotion information generation section) for carrying out processes shown in Fig. 6 (for example, a target power acquisition process 601, a calculation process 603, a determination process 604, and a charge promotion information generation process 605).

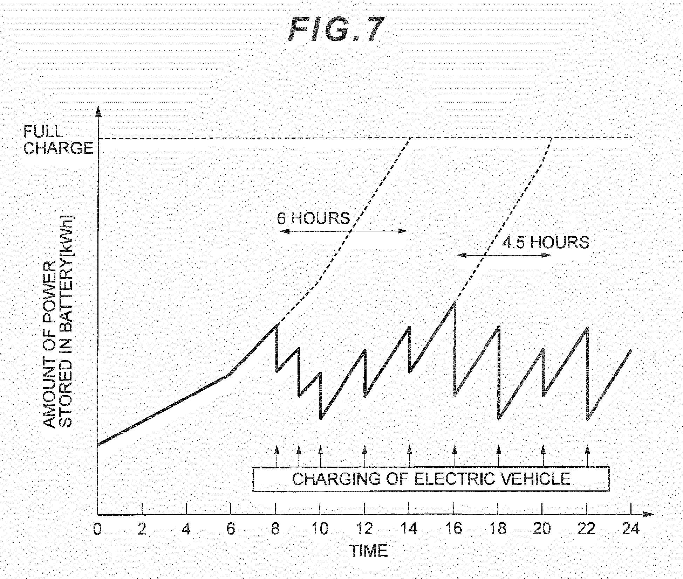

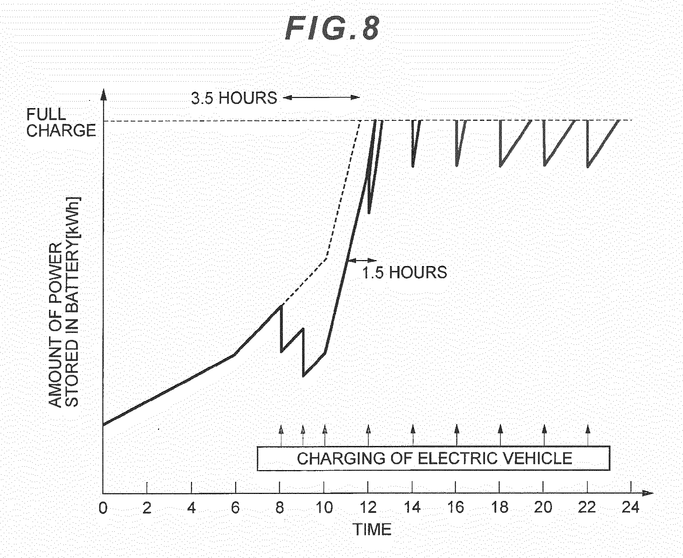

Fig. 7 is a graph showing a temporal variation in the amount of power stored in the battery 103 during rainy weather. Fig. 8 is a graph showing a temporal variation in the amount of power stored in the battery 103 during fine weather. Fig. 7 and Fig. 8 shows an example in which the electric vehicle 108 makes a charge request at 8:00, 9:00, 10:00, 12:00, 14:00, 16:00, 18:00, 20:00, and 22:00 and in which, during charging, the battery 103 discharges 20-kWh power to the electric vehicle 108. The battery 103 intermittently discharges at the above-described points in time while being charged with specified power in accordance with the target power amount set for each time block. In the example shown in Fig. 7, at 8:00, the remaining time before the battery 103 is fully charged is 6 hours. At 16:00, the remaining time before the battery 103 is fully charged is 4.5 hours. When a threshold beyond which charge promotion information is generated is, for example, 2 hours, no charge promotion information is generated. On the other hand, in the example shown in Fig. 8, at 8:00, the remaining time before the battery 103 is fully charged is 3.5 hours. At 11:00, the remaining time before the battery 103 is fully charged is 1.5 hours. When the threshold beyond which charge promotion information is generated is, for example, 2 hours, charge promotion information is generated at 11:00 because the remaining time before the battery 103 is fully charged is shorter than the threshold.

The power management server 105 transmits the charge promotion information to the vehicle management server 107. The vehicle management server 107 collects information on the position or traveling condition of each electric vehicle 108 and information on the state of charge of the secondary cell mounted in each electric vehicle 108. Based on the information, the vehicle management server 107 preferentially selects electric vehicles 108 positioned near the charging system 100, traveling electric vehicles 108, or electric vehicles 108 in which the secondary cell has an SOC value equal to or smaller than a threshold (for example, 30%), and distributes the charge promotion information to the selected electric vehicles 108 via the wired network or the wireless network. However, a distribution source of the charge promotion information is not limited to the vehicle management server 107. For example, an owner management server that manages information on an owner of the electric vehicle 108 (for example, identification information or position information on the owner) may preferentially distribute the charge promotion information to mobile terminals or the like of users positioned near the charging system 100. Alternatively, the charge promotion information need not necessarily be distributed to the electric vehicle 108 via the wired network or the wireless network. For example, the charge promotion information may be presented to digital signage or the like installed in the place where the charging system 100 is located.

The above description illustrates an example in which charge promotion information is generated when the remaining time before the battery 103 is fully charged is equal to or shorter than the threshold. However, charge promotion information may be generated when the remaining time before the charging rate of the battery 103 exceeds a charging rate indicative of a preset upper limit threshold (for example, a charging rate of 90%) is equal to or shorter than the threshold. In other words, a process shown in Fig. 6 illustrates a case where the charging rate indicative of the preset upper limit threshold, serving as a condition for generating charge promotion information, is set to 100%. Thus, the charging rate indicative of the preset upper limit threshold can be set to any value.

When the supply capacity for commercial power becomes larger than the power consumption of electric loads (electric loads for business use or for domestic use throughout a certain area including the charging system 100) connected to a distribution network to generate surplus power, the charging system 100 can prompt consumption of the surplus power by generating charge promotion information for providing an incentive for prompting the electric vehicle 108 to be charged and distributing or presenting the charge promotion information to the electric vehicle 108.

### Embodiment 2

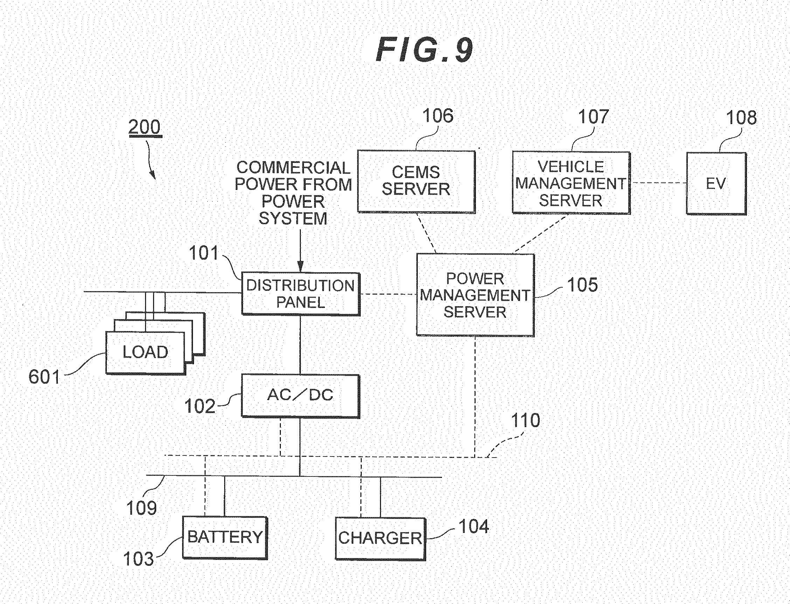

Fig. 9 is a block diagram showing a configuration of a charging system 200 according to Embodiment 2. The charging system 200 differs from the charging system 100 according to Embodiment 1 in that the charging system 200 includes an electric load 601 that consumes commercial power from a power system. The charging system 200 and the charging system 100 are otherwise the same. The charging system 100 according to Embodiment 1 solely exists, but the charging system 200 according to Embodiment 2 is assumed to be installed in, for example, a service station or a store such as a convenience store. The electric load 601 is, for example, electronic equipment installed in a store. As shown in Fig. 6, the electric load 601 is connected to a distribution panel 101, and the distribution panel 101 and a power management server 105 are connected together via a wired network or a wireless network.

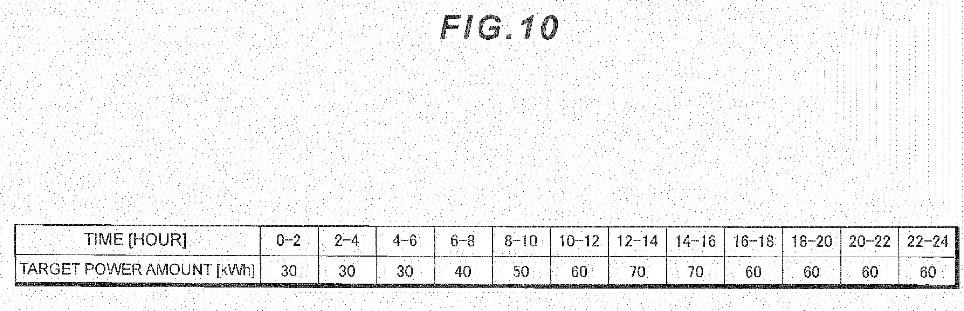

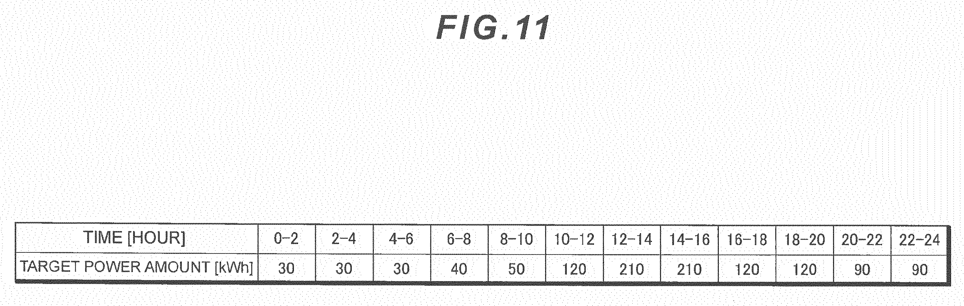

Fig. 10 shows target power amounts for the respective time blocks during rainy weather which the power management server 105 receives from a CEMS server 106. Fig. 11 shows target power amounts for the respective time blocks during fine weather which the power management server 105 receives from the CEMS server 106. The "target power amount" shown in Fig. 10 and Fig. 11 is a target value for the total of power consumed by the charging system 200 (power stored in a battery 103) and power consumed by the electric load 601.

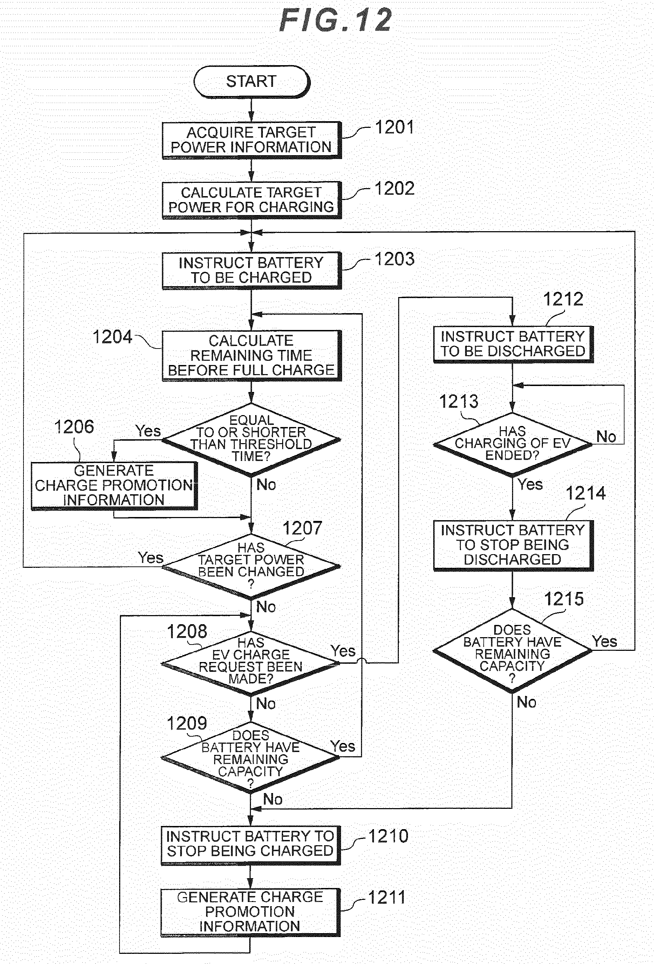

Fig. 12 is a flowchart describing processing carried out by the power management server 105. Upon receiving a target power amount from the CEMS server 106 (step 1201), the power management server 105 references a history of the power consumption of the electric load 601 collected from the distribution panel 101 and subtracts the power consumed by the electric load 601 from the target power specified by the CEMS server 106 to calculate target power consumed by the charging system 200 (step 1202). Processing in each of the subsequent steps 1203 to 1215 is substantially the same as the processing in the corresponding one of steps 602 to 614 shown in Fig. 4 and will thus not be described below. The power consumption of the electric load 601 need not necessarily be determined from the history. For example, the power consumption of the electric load 601 may be determined in real time. Alternatively, the target power consumed by the charging system 200 may be obtained by sequentially subtracting the power consumption of the electric load 601 per unit time from the target power received from the CEMS server 106.

### Embodiment 3

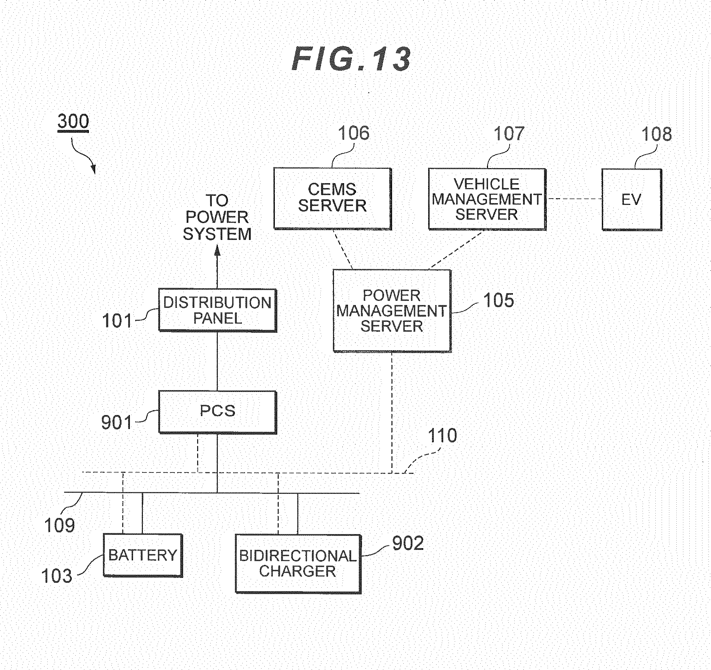

Fig. 13 is a block diagram showing a configuration of a charging system 300 according to Embodiment 3. When a supply capacity for commercial power becomes larger than the power consumption of electric loads (electric loads for business use or for domestic use throughout a certain area including the charging system 300) connected to a distribution network to generate surplus power or the supply capacity for commercial power becomes smaller than the power consumption of the electric loads (electric loads for business use or for domestic use throughout the certain area including the charging system 300) connected to the distribution network to cause power shortage, the charging system 300 prompts consumption of the surplus power or a supply of power that compensates for the power shortage by generating change and discharge promotion information for prompting an electric vehicle 108 to carry out charging or discharging or presenting the change and discharge promotion information to the electric vehicle 108. The charging system 300 differs from the charging system 100 according to Embodiment 1 in that the charging system 300 includes, instead of an AC/DC converter 102, a power conditioner 901 converting AC power received from the distribution panel 101 into DC power to charge a battery 103 with the DC power and converting AC power stored in the battery 103 into AC power to return the AC power to a power system and also includes, instead of a charger 104, a bidirectional charger 902 charging the electric vehicle 108 from the battery 103 and discharging power from the electric vehicle 108 to the battery 103. The charging system 300 and the charging system 100 are otherwise the same.

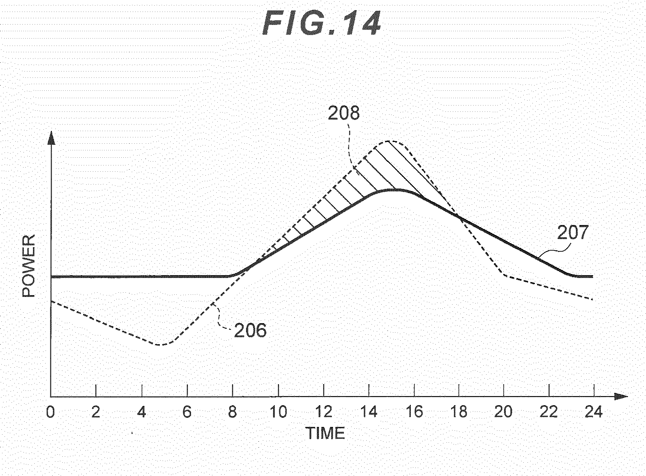

Fig. 14 illustrates a graph 206 showing a variation in power consumption in a certain area during a single day and a graph 207 showing a variation in power that can be supplied in the certain area during a single day. In a time block from 9:00 to 18:00, the power consumption in the area is larger than the amount of power that can supplied in the area, leading to power shortage 208.

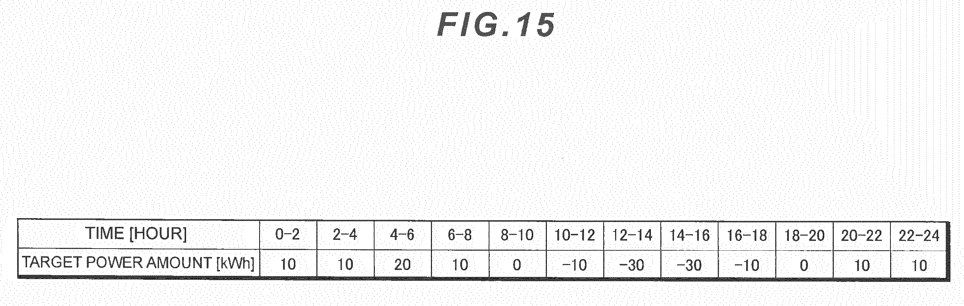

Fig. 15 shows target power amounts for the respective time blocks which a power management server 105 receives from a CEMS server 106. The "target power amount" shown in Fig. 15 is a target value for power consumed by the charging system 300 (power stored in the battery 103 or power stored in the electric vehicle 108) or power supplied by the charging system 300 (power discharged from the battery 103 or power discharged from the electric vehicle 108). Specifically, a target power amount with a positive value is indicative of a target value for the power consumed by the charging system 300. A target power amount with a negative value is indicative of a target value for the power supplied by the charging system 300. In an example illustrated in Fig. 15, the target power amount has a negative value in a time block in which power shortage may occur, and in a time block from 10:00 to 12:00, the charging system 300 is requested to supply 10-kWh power to the power system. Similarly, in a time block from 12:00 to 16:00, a supply of 30-kWh power is demanded, and in a time block from 16:00 to 18:00, a supply of 10-kWh power is demanded.

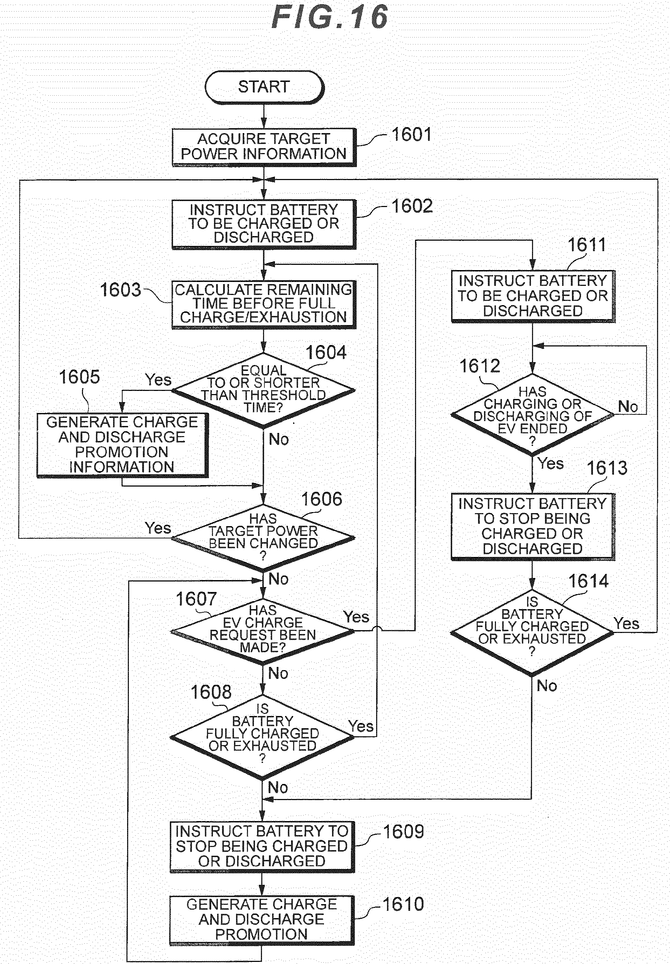

Fig. 16 is a flowchart describing processing carried out by the power management server 105. Upon receiving a target power amount from the CEMS server 106 (step 1601), the power management server 105 instructs the battery 103 to be charged or discharged in accordance with the target power amount (step 1602). For example, at 12:00, 30-kWh is demanded, and thus, the power management server 105 instructs the battery 103 to discharge 15-kW power per hour. The power management server 105 calculates a remaining time before the battery 103 is fully charged or before the battery 103 is fully discharged (step S1603). If the remaining time is equal to or shorter than a preset threshold (step 1604: YES), the power management server 105 generates change and discharge promotion information (step 1605). The charge and discharge promotion information is a general term for charge promotion information and discharge promotion information. If the remaining time before the battery 103 is fully charged is equal to or shorter than a threshold, the battery 103 has only a small remaining capacity, and charging the battery 103 with the target power amount is difficult. Thus, the power management server 105 generates charge promotion information for prompting charging of the electric vehicle 108 (discharging of the battery 103). If the remaining time before the battery 103 is fully discharged is equal to or shorter than a threshold, the power management server 105 generates discharge promotion information for prompting discharging of the electric vehicle 108 (charging of the battery 103) in order to avoid bringing the battery 103 into an overdischarge state. The discharge promotion information includes, for example, incentive information for actively prompting discharging (for example, information on a power purchase price or addition of bonus points), information on the range within which the incentive is applicable (for example, information on the lower limit of a discharging amount per vehicle and a limitation on the number of vehicles (for example, a first-come-first-served basis) in the case where the power purchase price or the addition of bonus points is applied), and position information indicative of a place where the charging system 300 is installed. The charge and discharge promotion information is distributed or presented to the electric vehicle 108 in a manner similar to that according to Embodiment 1.

On the other hand, if the remaining time is longer than the threshold (step 1604: NO), the power management server 105 determines whether or not the target power amount has been changed (step 1606). If the target power amount has been changed (step 1606: YES), the power management server 105 returns to step 1602. If the target power amount has not been changed (step 1606: NO), the power management server 105 determines whether or not the electric vehicle 108 has made a charge and discharge request (step 1607). If the electric vehicle 108 has not made a charge and discharge request (step 1607: NO), the power management server 105 determines whether or not the battery 103 is fully charged or fully discharged (step 1608). If the battery 103 is fully charged or fully discharged (step 1608: YES), the power management server 105 instructs the battery 103 to stop being charged or discharged (step 1609), generates charge and discharge promotion information (step 1610), and returns to step 1607. At this time, since the battery 103 is fully charged or fully discharged, the degree of urgency at which the battery 103 needs to be charged or discharged is higher than when the battery 103 has a remaining capacity or a battery residual amount. Thus, an incentive for charging or discharging provided in the charge and discharge promotion information generated in step 1610 is preferably better than an incentive for charging or discharging provided in the charge and discharge promotion information generated in step 1605. For example, preferably, the charging price discount or the number of bonus points added is set to be larger and a power purchase price is set be lower.

On the other hand, if the battery 103 is neither fully charged nor fully discharged (step 1608: YES), the power management server 105 returns to step 1603. If the electric vehicle 108 has made a charge request or a discharge request (step 1607: YES), the power management server 105 gives an instruction to charge the electric vehicle 108 with power from the battery 103 via a bidirectional charger 902 or to discharge power from the electric vehicle 108 to the battery 103 via the bidirectional charger 902 (step 1611). The power management server 105 allows the battery 103 to be charged or discharged until the charging or the discharging is complete (step 1612). When the charging or discharging of the electric vehicle 108 is complete (step 1612: YES), the power management server 105 instructs the battery 103 to stop being charged or discharged (step 1613). If the battery 103 is fully charged or fully discharged (step 1613: YES), the power management server 105 skips to step 1609. If the battery 103 is neither fully charged nor fully discharged (step 1614: NO), the power management server 105 returns to step 1602.

The power management server 105 is a computer system in which a power management program is implemented. Execution of the power management program allows the power management server 105 to function as means (for example, a target power acquisition section, a calculation section, a determination section, and a charge and discharge promotion information generation section) for carrying out processes shown in Fig. 16 (for example, a target power acquisition process 1601, a calculation process 1603, a determination process 1604, and a charge and discharge promotion information generation process 1605).

According to the charging system 300, when the supply capacity for commercial power becomes larger than the power consumption of electric loads (electric loads for business use or for domestic use throughout a certain area including the charging system 300) connected to a distribution network to generate surplus power or the supply capacity for commercial power becomes smaller than the power consumption of the electric loads (electric loads for business use or for domestic use throughout the certain area including the charging system 300) connected to the distribution network to cause power shortage, the charging system 300 can prompt consumption of the surplus power or a supply of power that compensates for the power shortage by generating charge and discharge promotion information for providing an incentive for prompting the electric vehicle 108 to be charged or discharged and distributing or presenting the charge and discharge promotion information to the electric vehicle 108.

In the above-described example, charge promotion information is generated if the remaining time before the battery 103 is fully charged is equal to or shorter than the threshold, and discharge promotion information is generated if the remaining time before the battery 103 is fully discharged is equal to or shorter than the threshold. However, charge promotion information may be generated if a remaining time before the charging rate of the battery 103 exceeds a charging rate indicative of a preset upper limit threshold (for example, a charging rate of 90%) is equal to or shorter than a threshold, and discharge promotion information may be generated if a remaining time before the charging rate of the battery 103 becomes lower than a charging rate indicative of a preset lower limit threshold (for example, a charging rate of 10%) is equal to or shorter than a threshold. In other words, the processing shown in Fig. 16 illustrates a case where the charging rate indicative of the upper limit threshold, serving as a condition for generating charge promotion information, is set to 100% and a case where the charging rate indicative of the lower limit threshold, serving as a condition for generating discharge promotion information, is set to 0%. The charging rates indicative of the upper limit threshold and the lower limit threshold can be optionally set.

Furthermore, like the charging system 200 according to Embodiment 2, the charging system 300 may include an electric load that consumes commercial power from the power system.

The present application claims priority based on Japanese Patent Application No. 2011-135667 filed on June 17, 2011 and incorporates all of the disclosure of Japanese Patent Application No. 2011-135667.

The present invention has been described above with reference to the embodiments. However, the present invention is not limited to the above-described embodiments. Various changes understandable to those skilled in the art may be made to the configurations and details of the present invention without departing from the scope of the present invention.

Some or all of the present embodiments may be described as in appendices below but are not limited to the appendices.

### (Appendix 1)

A charging system including:
a battery;
a calculation section configured to calculate a remaining time before a charging rate of the battery exceeds a charging rate indicative of an upper limit threshold;
a determination section configured to determine whether or not the calculated remaining time is equal to or shorter than a threshold; and
a charge promotion information generation section configured to generate charge promotion information for prompting charging of an electric vehicle from the battery when the remaining time is equal to or shorter than the threshold.

### (Appendix 2)

The charging system set forth in Appendix 1, wherein the charge promotion information includes incentive information on at least one of a charging price discount and addition of bonus points.

### (Appendix 3)

The charging system set forth in Appendix 1 or Appendix 2, further including a target power acquisition section configured to acquire a target value for power stored in the battery,
wherein the calculation section is configured to use the target value to calculate the remaining time before the charging rate of the battery exceeds the charging rate indicative of the upper limit threshold.

### (Appendix 4)

The charging system set forth in any one of Appendix 1 to Appendix 3, further including a vehicle management section configured to select, based on a position, a state of charge, or a traveling condition of each electric vehicle, an electric vehicle to which the charge promotion information is to be distributed, and to distribute the charge promotion information to the selected electric vehicle.

### (Appendix 5)

A charging system including:
a battery;
a calculation section configured to calculate a remaining time before a charging rate of the battery becomes lower than a charging rate indicative of a lower limit threshold;
a determination section configured to determine whether or not the calculated remaining time is equal to or shorter than a threshold;
a discharge promotion information generation section configured to generate discharge promotion information for prompting discharging of power from an electric vehicle to the battery when the remaining time is equal to or shorter than the threshold; and
a charger configured to discharge power stored in the electric vehicle to the battery.

### (Appendix 6)

The charging system set forth in Appendix 5, wherein the discharge promotion information includes incentive information on at least one of a power purchase price and addition of bonus points.

### (Appendix 7)

The charging system set forth in Appendix 5 or Appendix 6, further including a target power acquisition section configured to acquire a target value for power discharged from the battery,
wherein the calculation section is configured to use the target value to calculate the remaining time before the charging rate of the battery becomes lower than the charging rate indicative of the lower limit threshold.

### (Appendix 8)

The charging system set forth in any one of Appendix 5 to Appendix 7, further including a vehicle management section configured to select, based on a position, a state of charge, or a traveling condition of each electric vehicle, an electric vehicle to which the discharge promotion information is to be distributed, and to distribute the discharge promotion information to the selected electric vehicle.

### (Appendix 9)

The charging system set forth in any one of Appendix 1 to Appendix 8, further including a charger configured to charge the electric vehicle with power stored in the battery.

### (Appendix 10)

A power management server including:
a calculation section configured to calculate a remaining time before a charging rate of a battery exceeds a charging rate indicative of an upper limit threshold;
a determination section configured to determine whether or not the calculated remaining time is equal to or shorter than a threshold; and
a charge promotion information generation section configured to generate charge promotion information for prompting charging of an electric vehicle from the battery when the remaining time is equal to or shorter than the threshold.

### (Appendix 11)

A power management server including:
a calculation section configured to calculate a remaining time before a charging rate of a battery becomes lower than a charging rate indicative of a lower limit threshold;
a determination section configured to determine whether or not the calculated remaining time is equal to or shorter than a threshold; and
a discharge promotion information generation section configured to generate discharge promotion information for prompting discharging of power from an electric vehicle to the battery when the remaining time is equal to or shorter than the threshold.

### (Appendix 12)

A vehicle management server including:
a management section configured tot manage a position, a state of charge, or a traveling condition of an electric vehicle;
a selection section configured to select, based on the position, the state of charge, or the traveling condition of each electric vehicle, an electric vehicle to which charge promotion information for prompting charging of an electric vehicle from a battery is to be distributed; and
a distribution section configured to distribute the charge promotion information to the selected electric vehicle.

### (Appendix 13)

A vehicle management server including:
a management section configured to manage a position, a state of charge, or a traveling condition of an electric vehicle;
a selection section configured to select, based on the position, the state of charge, or the traveling condition of each electric vehicle, an electric vehicle to which discharge promotion information for prompting discharging of power from an electric vehicle to a battery is to be distributed; and
a distribution section configured to distribute the discharge promotion information to the selected electric vehicle.

### (Appendix 14)

A power management program allowing a computer system to execute:
calculating a remaining time before a charging rate of a battery exceeds a charging rate indicative of an upper limit threshold;
determining whether or not the calculated remaining time is equal to or shorter than a threshold; and
generating charge promotion information for prompting charging of an electric vehicle from the battery when the remaining time is equal to or shorter than the threshold.

### (Appendix 15)

A power management program allowing a computer system to execute:
calculating a remaining time before a charging rate of a battery becomes lower than a charging rate indicative of a lower limit threshold;
determining whether or not the calculated remaining time is equal to or shorter than a threshold; and
generating discharge promotion information for prompting discharging of power from an electric vehicle to the battery when the remaining time is equal to or shorter than the threshold.
[0039]
- 100, 200, 300: Charging system
- 101: Distribution panel
- 102: AC/DC converter
- 103: Battery
- 104: Charger
- 105: Power management server
- 106: CEMS server
- 107: Vehicle management server
- 108: Electric vehicle
- 601: Electric load
- 901: Power conditioner
- 902: Bidirectional charger

## Claims

1. A charging system comprising:
a battery;
a calculation section configured to calculate a remaining time before a charging rate of the battery exceeds a charging rate indicative of an upper limit threshold;
a determination section configured to determine whether or not the calculated remaining time is equal to or shorter than a threshold; and
a charge promotion information generation section configured to generate charge promotion information for prompting charging of an electric vehicle from the battery when the remaining time is equal to or shorter than the threshold.

2. The charging system according to claim 1, wherein the charge promotion information includes incentive information on at least one of a charging price discount and addition of bonus points.

3. The charging system according to claim 1 or claim 2, further comprising a target power acquisition section configured to acquire a target value for power stored in the battery,
wherein the calculation section is configured to use the target value to calculate the remaining time before the charging rate of the battery exceeds the charging rate indicative of the upper limit threshold.

4. The charging system according to any one of claim 1 to claim 3, further comprising a vehicle management section is configured to select, based on a position, a state of charge, or a traveling condition of each electric vehicle, an electric vehicle to which the charge promotion information is to be distributed, and to distribute the charge promotion information to the selected electric vehicle.

5. A charging system comprising:
a battery;
a calculation section configured to calculate a remaining time before a charging rate of the battery becomes lower than a charging rate indicative of a lower limit threshold;
a determination section configured to determine whether or not the calculated remaining time is equal to or shorter than a threshold;
a discharge promotion information generation section configured to generate discharge promotion information for prompting discharging of power from an electric vehicle to the battery when the remaining time is equal to or shorter than the threshold; and
a charger configured to discharge power stored in the electric vehicle to the battery.

6. The charging system according to claim 5, wherein the discharge promotion information includes incentive information on at least one of a power purchase price and addition of bonus points.

7. The charging system according to claim 5 or claim 6, further comprising a target power acquisition section configured to acquire a target value for power discharged from the battery,
wherein the calculation section is configured to use the target value to calculate the remaining time before the charging rate of the battery becomes lower than the charging rate indicative of the lower limit threshold.

8. The charging system according to any one of claim 5 to claim 7, further comprising a vehicle management section configured to select, based on a position, a state of charge, or a traveling condition of each electric vehicle, an electric vehicle to which the discharge promotion information is to be distributed, and is configured to distribute the discharge promotion information to the selected electric vehicle.

9. The charging system according to any one of claim 1 to claim 8, further comprising a charger configured to charge the electric vehicle with power stored in the battery.

10. A power management server comprising:
a calculation section configured to calculate a remaining time before a charging rate of a battery exceeds a charging rate indicative of an upper limit threshold;
a determination section configured to determine whether or not the calculated remaining time is equal to or shorter than a threshold; and
a charge promotion information generation section configured to generate charge promotion information for prompting charging of an electric vehicle from the battery when the remaining time is equal to or shorter than the threshold.

11. A power management server comprising:
a calculation section configured to calculate a remaining time before a charging rate of a battery becomes lower than a charging rate indicative of a lower limit threshold;
a determination section configured to determine whether or not the calculated remaining time is equal to or shorter than a threshold; and
a discharge promotion information generation section configured to generate discharge promotion information for prompting discharging of power from an electric vehicle to the battery when the remaining time is equal to or shorter than the threshold.

12. A vehicle management server comprising:
a management section configured to manage a position, a state of charge, or a traveling condition of an electric vehicle;
a selection section configured to select, based on the position, the state of charge, or the traveling condition of each electric vehicle, an electric vehicle to which charge promotion information for prompting charging of an electric vehicle from a battery is to be distributed; and
a distribution section configured to distribute the charge promotion information to the selected electric vehicle.

13. A vehicle management server comprising:
a management section configured to manage a position, a state of charge, or a traveling condition of an electric vehicle;
a selection section configured to select, based on the position, the state of charge, or the traveling condition of each electric vehicle, an electric vehicle to which discharge promotion information for prompting discharging of power from an electric vehicle to a battery is to be distributed; and
a distribution section configured to distribute the discharge promotion information to the selected electric vehicle.

14. A computer program allowing a computer system to execute:
calculating a remaining time before a charging rate of a battery exceeds a charging rate indicative of an upper limit threshold;
determining whether or not the calculated remaining time is equal to or shorter than a threshold; and
generating charge promotion information for prompting charging of an electric vehicle from the battery when the remaining time is equal to or shorter than the threshold.

15. A computer program allowing a computer system to execute:
calculating a remaining time before a charging rate of a battery becomes lower than a charging rate indicative of a lower limit threshold;
determining whether or not the calculated remaining time is equal to or shorter than a threshold; and
generating discharge promotion information for prompting discharging of power from an electric vehicle to the battery when the remaining time is equal to or shorter than the threshold.
